Europäisches Patentamt

European Patent Office

Office européen des brevets

(19)

(11) Publication number: **0 449 350 A1**

# (12) EUROPEAN PATENT APPLICATION

(21) Application number: **91200549.3**

(22) Date of filing: **13.03.91**

(51) Int. Cl.5: **A23D 7/00**

(30) Priority: **26.03.90 EP 90200700**

(43) Date of publication of application:
**02.10.91 Bulletin 91/40**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**
(84) **BE CH DE DK ES FR GR IT LI NL SE AT**

Applicant: **UNILEVER PLC**
**Unilever House Blackfriars P.O. Box 68**
**London EC4P 4BQ(GB)**
(84) **GB**

(72) Inventor: **Struik, Mattheus**
**Unilever Research Lab., Olivier van**
**Noortlaan 120**
**Vlaardingen(NL)**
Inventor: **Wesdorp, Leendert Hendrik**
**Unilever Research Lab., Olivier van**
**Noortlaan 120**
**Vlaardingen(NL)**

(74) Representative: **Bot, David Simon Maria et al**
**Unilever N.V., Patent Division, P.O. Box 137**
**NL-3130 AC Vlaardingen(NL)**

(54) **Edible fat-containing product and process for preparing same.**

(57) The present invention is concerned with edible fat-containing products comprising from 5% to 70%, calculated by weight of the total amount of fat, of hardstock indigestible polyol fatty acid polyesters, wherein the product consists of an oil-in-water-in-oil emulsion comprising an internal dispersed fat phase and an external continuous fat phase, the combined polyol fatty acid polyesters present in the internal oil phase having a slip melting point above 36° C and the combined polyol fatty acid polyesters present in the external fat phase having a slip melting point below 36° C.

The present invention enables the inclusion of a substantial amount of high melting polyol fatty acid polyester in such a manner that the disadvantages normally resulting therefrom are essentially largely overcome.

The invention relates to edible fat-containing products comprising from 5% to 70%, calculated by weight of the total amount of fat, of hardstock indigestible polyol fatty acid polyesters. In particular, although not exclusively, the invention relates to such products of the emulsion type, such as margarines and low-fat spreads. The invention further relates to processes for the preparation of such products.

Polyol fatty acid polyesters, and in particular, the sugar fatty acid polyesters, such as e.g. the sucrose fatty acid polyesters, are known as suitable low-calorie fat-replacers in edible products. Essentially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body. Accordingly, it is attractive to replace at least part of the fat in edible fat-containing products by polyol fatty acid polyesters.

It is further reported that in food products the use of polyol fatty acid polyesters which are liquid at body temperature, may give rise to the so-called problem of anal leakage. Accordingly, it is particularly attractive to replace the more solid part (hardstock) of the fat by counter-part polyol fatty acid polyesters.

Edible fat-containing products comprising indigestible polyol fatty acid polyesters are known in the art, and described in eg U.S. Pat. Nos. 3,600,186, 4,005,195, 4,005,196, 4,034,083 and EP Pat. Publ. Nos. 0 233 856, 0 236 288, and 0 235 836.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. The terms fat and oil are used interchangeably.

In this specification the term 'polyol' is intended to refer to any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used sugar polyol is sucrose.

In this specification the term 'polyol fatty acid polyester' is intended to refer to any such polyesters or mixtures thereof of which, on an average, more than 70 % of the polyol hydroxyl groups have been esterified with fatty acids.

In this specification by 'indigestible' is meant that at least about 70 % by weight of the material concerned is not digested by the human body.

In this specification by 'hardstock' is meant that part of a fat composition characterized by a slip melting point of above $36^\circ$ C. 'Slip melting point' is defined as the temperature at which the amount of solid phase in the melting fat has become so low that an air bubble is forced upwards in an open capillary filled with the fat.

Fat-containing products and in particular, emulsion-type products such as margarines and low-fat spreads, have to comply with requirements such as microbiological and (temperature) cycle stability, oral response, spreadability, melting behaviour and the like. Often they have to comply with such requirements simultaneously.

The products according to the invention contain a substantial amount of hardstock, i.e. relatively high melting, polyol fatty acid polyesters. The inclusion of such high melting fat material can be advantageous in that it generally improves the heat stability of the product and can help to avoid anal leakage of low melting polyol fatty acid polyester. The inclusion of hardstock polyol fatty acid polyester, however, has the drawback that the oral response and melting behaviour of the product are negatively affected.

We have found a way to include a substantial amount of high melting polyol fatty acid polyester in such a manner that the above mentioned drawbacks are essentially negated. By dispersing the high melting polyol fatty acid polyester into an aqueous phase and again dispersing the oil-in-water emulsion so obtained into another relatively low melting fat phase, a product is obtained which has excellent stability (both microbiological and cycle), oral response and melting.

Accordingly the present invention is concerned with an edible fat-containing product comprising from 5% to 70%, calculated by weight of the total amount of fat, of hardstock indigestible polyol fatty acid polyesters, wherein the product consists of an oil-in-water-in-oil emulsion comprising an internal dispersed fat phase and an external continuous fat phase, the combined polyol fatty acid polyesters present in the internal oil phase having a slip melting point above 36°C and the combined polyol fatty acid polyesters present in the external fat phase having a slip melting point below 36°C.

The advantages of the present invention are particularly pronounced in products that contain a substantial amount of low melting polyol fatty acid polyester which in the absence of the high melting polyol fatty acid polyesters in the internal fat phase would give rise to anal leakage. Although we do not wish to be bound by theory, it is believed that in the intestines the internal and external fat phase blend, as a result of which anal leakage is prevented since the high melting polyol fatty acid polyester act as an anal leakage agent.

According to a very preferred embodiment of the invention the internal fat phase constitutes from 15% to 75% and the external phase 85% to 25% by weight of the total amount of fat present in the product. More preferably the internal fat phase constitutes from 20% to 70% and the external phase 80% to 25% by weight of the total amount of fat present in the product.

The benefits offered by the present invention are most appreciated in products containing a substantial amount of polyol fatty acid polyester that may give rise to anal leakage, i.e. polyol fatty acid polyester having a slip melting point of less than 36°C. Accordingly in a preferred embodiment the combined polyol fatty acid polyesters having a slip melting point below 36°C constitute at least 40 wt.%, preferably at least 60 wt.% of the external fat phase.

In order to minimize the risk of anal leakage it is advisable that the combined polyol fatty acid polyesters present in the product have a slip melting point of more than 34°C, preferably of more than 36°C. In order to prevent anal leakage of lower melting polyol fatty acid polyester the polyol fatty acid polyester included in the internal fat phase should have a relatively high slip melting point. Preferably the combined polyol fatty acid polyesters in the internal fat phase have a slip melting point of at least 38°C.

The external fat phase present in the product according to the invention largely determines the oral response and melting impression of said product. We have found it advantageous to employ an external fat phase having an $N_{35}$ of less than 2 and an $N_{20}$ of more than 12.

In addition to the hardstock polyol fatty acid polyesters it is possible to further include in the internal fat phase conventional hardstocks triglyceride fats. However, it is preferred that the hardstock used in the products of the invention consists of over 50 %, preferably of over 80 % or even 90 % by weight of polyol fatty acid polyesters. Most preferably the hardstock substantially completely consists of polyol fatty acid polyesters.

The total amount of hardstock in the internal fat phase of the products of the invention is at least 5 % calculated by weight of the total amount of fat. Preferably the amount of hardstock lies in the range of 10 to 70 %, the range of 15 to 60 % being most preferred.

According to yet another preferred embodiment the overall slip melting point of the combined polyol fatty acid polyesters present in the external fat phase is below 36°C. By variation of the particular blend of fatty acid residues used in the synthesis the slip melting point of the polyol fatty acid polyesters can be influenced. More saturated and/or long-chain fatty acid residues result in a higher slip melting point than unsaturated and/or short-chain fatty acid residues. The slip melting point of the hardstock polyol fatty acid polyesters preferably lies within the range of from 37 to 55°C, in particular of from 40 to 50°C.

Suitable polyol fatty acid polyesters have been defined in chemical terms hereinbefore. Preferably, polyol fatty acid polyesters derived from sugars or sugar alcohols are applied, and in particular, sugar fatty acid polyesters derived from disaccharides, such as sucrose. Very suitable have been found sugar fatty acid polyesters of which at least 50 % of the fatty acid residues are derived from saturated fatty acids, in particular saturated $C_8$-$C_{22}$ fatty acids. Sucrose polyesters of which at least 70 % of the fatty acid residues are derived from $C_{12}$-$C_{18}$ fatty acids, are preferred.

In general fatty acids per se or naturally occurring in fats and oils may be used as source for the fatty acid residues in the polyol fatty acid polyesters. Conventional techniques may be used to introduce, if necessary, the required degree of saturation. Suitable such techniques include full or partial hydrogenation, interesterification, transesterification and fractionation, and may be used before or after conversion of the polyols to polyol fatty acid polyesters.

Suitably polyol fatty acid polyesters are used which are completely or partly derived from trans-hydrogenated triglycerides or the corresponding lower alkylesters thereof, as described in EP 0 235 836. Alternatively, the desired level of trans fatty acid residues may also be introduced by first converting to the polyol fatty acid polyester and subsequent trans-hydrogenation.

As defined hereinbefore polyol fatty acid polyesters may be applied of which, on an average, more than 70 % of the polyol hydroxyl groups have been esterified with fatty acids. Preferably polyol fatty acid polyesters are used with higher degrees of conversion, in particular polyol fatty acid polyesters of which, on an average, more than 85 % or even over 95 % of the polyol hydroxyl groups have been esterified with fatty acids.

The products in accordance with the invention in general have an overall fat content between 35 and 90 % by weight. In a preferred aspect of the invention such products 55-90 % by weight of fat, margarine-type spreads having a fat content of 65-90 % by weight being preferred most.

In addition to the hardstock fat the products of the invention generally comprise conventional oils and fats which may be of both animal and vegetable origin. Suitable conventional triglyceride fats and oils include, optionally partially hydrogenated, coconut oil, palmkernel oil, palm oil, marine oils, lard, tallow fat, butter fat, soybean oil, safflower oil, cotton seed oil, rapeseed oil, poppy seed oil, corn oil sunflower oil and mixtures thereof. Of these oils sunflower oil is preferred.

It has been well recognised that fat-containing products containing relatively large amounts of digestible polyunsaturated fatty acid residues are attractive for their cholesterol-lowering effect.

The concentration of unsaturated fatty acid residues, such as in particular linoleic fatty acid residues, in the present fat product is preferably between 30 and 80%, in particular at least 40%, or even 50 or 60% by weight of the total amount of digestible fatty acid residues present in the fat phase.

In the products according to the invention conventionally used fat- and water-soluble additives, such as emulsifiers, milk, proteins, preservatives, vitamins, in particular, vitamins A, D and E, salt and flavour compounds, may be incorporated.

In general the fat product of the invention has an overall $N_{40}$ below 10, more preferably it has an $N_{35}$ below 10 and an $N_{20}$ below 30, preferably between 8 and 25. The N-values are measured by using the NMR method as described in Journal of American Oil Chemists' Society, 51 (1974), 316 by Van Putte et al.

Another aspect of the present invention relates to a process for the preparation of the fat-containing products according to the present invention. The process according to the invention requires the admixture of two separately processed fractions, as contrasted to conventional processes in which only one previously prepared emulsion (containing only molten fat) is processed.

More particularly this embodiment relates to a process for the preparation of edible fat-containing products comprising from 5% to 70%, calculated by weight of the total amount of fat, of hardstock indigestible polyol fatty acid polyesters, the process comprising combining an oil-in-water emulsion containing polyol fatty acid polyesters, the combined polyesters having a slip melting point above 36°C, with a fraction containing polyol fatty acid polyesters with a slip melting point below 36°C and mixing of these two fractions under the formation of an oil-in-water-in-oil emulsion.

According to another preferred embodiment the combined polyol fatty acid polyesters present in the polyol fatty acid polyester containing fraction have a slip melting point below 35°C, or even 30°C. This fat may be substantially liquid before full mixing with the further fat-containing fractions, but it has been found advantageous that the fat in this fraction contains some crystallized fat at the point of mixing, such as at least 1 % by weight, preferably between 2 and 20 % by weight of the fraction.

The combined polyol fatty acid polyesters in the oil-in-water emulsion preferably have a slip melting point of between 37° and 55°C, more preferably between 40 and 50°C. The fat in the oil-in-water emulsion, which comprises a significant part of the hardstock fats, such as at least 60 %, and preferably at least 80 % by weight, in general will contain crystallized fat at the point of mixing, although also crystal formation may take place during the mixing, provided mixing conditions are such that partial crystallization has taken place before full mixing. Typical amounts of crystallized fat in this fat-containing fraction before full mixing are between 2 and 30 % by weight, but preferably not more than 15 % by weight of the fraction.

It is preferred that the slip melting points of the polyol polyesters in the two separately processed fat-containing fractions differ by at least 5°C, more in particular 10°C.

In a preferred aspect of the process of the invention, which is particularly directed to the preparation of spreads, the high melting polyol polyester is emulsified with an aqueous phase. The surface weighted mean diameter (as measured by means of NMR) of the oil-droplets in the oil-in-water emulsion so obtained is suitably below 5 microns. Homogenization may be effected in any suitable homogenizer known in the art.

The temperature of the oil-in-water emulsion on admixture with the fraction containing lower melting polyol polyesters, preferably, is below 15°C, more in particular below 10°C. Most preferably, the temperature is adjusted to a value between 5 and 10°C. The oil-in-water emulsion can suitably be cooled down to the appropriate temperature using a tubular heat exchanger in which the emulsion is not subjected to high shear conditions. The cooled oil-in-water emulsion, preferably contains at least 40% of crystallized fat by weight of total fat, on admixture with the fraction comprising a polyol polyester of lower slip melting point. The latter fraction has such a temperature that the solids content thereof is below 20 wt.%, preferably below 15 wt.%.

Preferably the oil-in-water emulsion comprises at least 15% solid fat by weight of total fat before mixing. The slip melting point of the fat present in the latter emulsion preferably is above 36°C. More preferably, the slip melting point of the fat in said emulsion is above 40°C.

The oil-in-water emulsion can suitably contain one or more emulsifiers that promote the formation of an oil-in-water-emulsion, whereas also the fat- and water-soluble additives required for the final product can advantageously incorporated therein.

The relative amounts of the two separate process streams can vary widely, depending on the type of fats and the amount of water present. A lower limit for the amount of oil-in-water-emulsion is 17.5% by weight, corresponding to 82.5% by weight for the fat fraction. The upper limit for the oil- in-water-emulsion is 97%, preferably 80%, by weight, corresponding to 3% respectively 20% by weight of second fat fraction. In general the contribution of the oil-in-water-emulsion will not exceed 90% by weight. Preferably said contribution remains below 80% by weight.

Suitable mixers for admixing the oil-in-water emulsion and the second fraction are known in the art. Examples thereof are A-units, C-units, static mixers and jet mixers. It is also possible to use a cavity transfer mixer, as described in WO-A 8 303 222.

After the mixing step, the product is suitably fed to a packing line, without further working or cooling, and is packed. The packed product is then stored during which storage the final properties are obtained.

EXAMPLES

Example 1

A margarine was prepared, comprising 70 wt.% fat and 30 wt.% of a dispersed aqueous phase. The margarine was made by admixing

(a) an oil-in-water emulsion having a temperature of 15°C and comprising 58% of SPE1 with a slip melting point of 42°C and 42% of a water phase containing small amounts of K-sorbate, NaCl and whey powder (Bipro) with

(b) such an amount of a liquid fat phase having a temperature of 45°C (said fat phase consisting of a blend of 45 wt.% SPE2 having a slip melting point below 10°C, 15 wt.% SPE3 having a slip melting point of 38°C and 40 wt.% SF triglycerides) that the final product had the following composition:

Combined fat phases
69.24% different fats
0.08% emulsifier (Admul 6203)
0.10% $\beta$-carotene
0.58% emulsifier Dimodan LS

Aqueous phase
28.80% $H_2O$
0.10% K-Sorbate
0.50% NaCl
0.60% Bipro.

The chemical constitution of the sucrose polyesters can be summarized as follows:

SPE1    fatty acid residues derived from 55% fully hardened soybean oil having slip melting point of 65°C and 45% touch hardened soybean oil having slip melting point of 28°C

SPE2    fatty acid residues derived from touch hardened soybean oil having slip melting point of 28°C

SPE3    fatty acid residues derived from 53% fully hardened palm kernel oil having slip melting point of 39°C and 47% fully hardened palm oil having slip melting point of 58°C

The end product showed the following properties:

| $N_{10}$: 41.2 | S5 = 621 | Salt release: |
|---|---|---|
| $N_{20}$: 28.1 | S10= 281 | 71% at 35°C |
| $N_{30}$: 12.8 | S20=101 | 100% at 43°C |
| $N_{35}$: 6.1 | | |

When a product is prepared from the same ingredients using a process wherein the fat phases are combined prior to admixture with the aqueous phase, the fat-continuous product obtained has a significantly worse mouthfeel and flavour release than the above product.

Example 2

A margarine was prepared, comprising 70 wt.% fat and 30 wt.% of a dispersed aqueous phase. The margarine was made by admixing in a Cavity Transfer Mixer rotating at 750 rpm (at a throughput of 8 kg/hr)

(a) an oil-in-water emulsion having a temperature of $2\,^\circ$C (previously cooled in a tubular heat exchanger) and comprising 44.1 wt.% of SPE1 as in Example 1 and 55.9 wt.% of an aqueous phase as in Example 1, with

(b) such an amount of a liquid fat phase having a temperature of $45\,^\circ$C (said fat phase consisting of a blend of 65 wt.% SPE2 as in Example 1 and 35 wt.% of SPE4 derived from palm oil triglycerides which had been hydrogenated to a slip melting point of $44\,^\circ$C) that the final product had the following composition:

Combined fat phases
69.24% different fats
0.08% emulsifier (Admul 6203)
0.10% $\beta$-carotene
0.58% emulsifier Dimodan LS

Aqueous phase
28.80% $H_2O$
0.10% K-Sorbate
0.50% NaCl
0.60% Bipro.

The N-value of the fat in the internal and external fat phases was measured at several temperatures (after equilibration at $0\,^\circ$C for 16 hours and subsequent equilibration at measurement temperature) producing the following results:

|  | Internal | External |
|---|---|---|
| $N_{10}$ | 77.5 | 27.0 |
| $N_{15}$ | 70.6 | 20.7 |
| $N_{20}$ | 61.1 | 12.4 |
| $N_{25}$ | 48.3 | 5.8 |
| $N_{30}$ | 31.3 | 0.9 |
| $N_{35}$ | 15.2 | 0.2 |
| $N_{40}$ | 5.8 | 0.1 |
| $N_{45}$ | 0.2 | - |

An expert test panel again found the oil-in-water-in-oil emulsion to have a much better oral response than a product of the same composition consisting of a water-in-oil emulsion produced on a line comprising a sequence of two A-units and one C-unit.

The internal fat phase and external fat phase were separated by melting the external fat phase whilst maintaining the temperature below the slip melting point of the internal fat phase. It was found that essentially all the fat originally included in the oil-in-water emulsion had ended up in the internal fat phase.

Example 3

A margarine was prepared, comprising 80 wt.% fat and 20 wt.% of a dispersed aqueous phase. The margarine was made by admixing in a Cavity Transfer Mixer rotating at 750 rpm (at a throughput of 8 kg/hr)

(a) an oil-in-water emulsion having a temperature of $2\,^\circ$C (previously cooled in a tubular heat exchanger) and comprising 58.3 wt.% of SPE1 as in Example 1 and 41.7 wt.% of an aqueous phase as in Example 1, with
(b) such an amount of a liquid fat phase having a temperature of 45°C (said fat phase consisting of a blend of 65 wt.% SPE2 as in Example 1 and 35 wt.% of SPE4 derived from palm oil triglycerides which had been hydrogenated to a slip melting point of 44°C) that the final product had the following composition:

Combined fat phases
69.24% different fats
0.08% emulsifier (Admul 6203)
0.10% β-carotene
0.58% emulsifier Dimodan LS

Aqueous phase
28.80% $H_2O$
0.10% K-Sorbate
0.50% NaCl
0.60% Bipro.

An expert test panel found the oil-in-water-in-oil emulsion to have a much better melt down behaviour and flavour release than a product of the same composition consisting of a water-in-oil emulsion produced on a line comprising a sequence of two A-units and one C-unit.

Again by melting the external phase of the product it was found that essentially all the fat originally included in the oil-in-water emulsion had ended up in the internal fat phase.

Example 4

A margarine was prepared, comprising 70 wt.% fat and 30 wt.% of a dispersed aqueous phase. The margarine was made by admixing in a Cavity Transfer Mixer rotating at 750 rpm (at a throughput of 6 kg/hr)

(a) an oil-in-water emulsion having a temperature of 5°C and comprising 44.9 wt.% of SPE1 as in Example 1 and 55.1 wt.% of an aqueous phase as in Example 1, with
(b) such an amount of a liquid fat phase having a temperature of 50°C (said fat phase consisting of a blend of 19 wt.% SPE1 as in Example 1 and 81 wt.% SPE2) that the final product had the following composition:

Combined fat phases
69.24% different fats
0.08% emulsifier (Admul 6203)
0.10% β-carotene
0.58% emulsifier Dimodan LS

Aqueous phase
28.80% $H_2O$
0.10% K-Sorbate
0.50% NaCl
0.60% Bipro.

An expert test panel again found the oil-in-water-in-oil emulsion to produce a thinner mouthfeel and quicker flavour/salt release than a product of the same composition consisting of a water-in-oil emulsion produced on a line comprising a sequence of two A-units and one C-unit.

The internal fat phase and external fat phase were separated by melting the external fat phase whilst maintaining the temperature below the slip melting point of the internal fat phase. It was found that essentially all the fat originally included in the oil-in-water emulsion had ended up in the internal fat phase.

**Claims**

1. Edible fat-containing product comprising from 5% to 70%, calculated by weight of the total amount of fat, of hardstock indigestible polyol fatty acid polyesters, wherein the product consists of an oil-in-water-in-oil emulsion comprising an internal dispersed fat phase and an external continuous fat phase, the combined polyol fatty acid polyesters present in the internal oil phase having a slip melting point above 36°C and the combined polyol fatty acid polyesters present in the external fat phase having a slip melting point below 36°C.

2. Product according to claim 1, wherein the internal fat phase constitutes from 15% to 75% and the external phase 85% to 25% by weight of the total amount of fat.

3. Product according to claim 1 or 2, wherein the combined polyol fatty acid polyesters having a slip melting point below 36°C constitute at least 40 wt.%, preferably at least 60 wt.% of the external fat phase.

4. Product according to any one of claims 1-3, wherein the combined polyol fatty acid polyesters present in the product have a slip melting point of more than 34°C, preferably of more than 36°C.

5. Product according to any one of claims 1-4, wherein the combined polyol fatty acid polyesters in the internal fat phase have a slip melting point of at least 38°C.

6. Product according to any one of claims 1-5, wherein the external fat phase has an $N_{35}$ of less than 2 and an $N_{20}$ of more than 12.

7. Process for the preparation of edible fat-containing products comprising from 5% to 70%, calculated by weight of the total amount of fat, of hardstock indigestible polyol fatty acid polyesters, the process comprising combining an oil-in-water emulsion containing polyol fatty acid polyesters, the combined polyesters having a slip melting point above 36°C, with a fraction containing polyol fatty acid polyesters with a slip melting point below 36°C and mixing of these two fractions under the formation of an oil-in-water-in-oil emulsion.

8. Process according to claim 7 wherein the combined polyol fatty acid polyesters in the oil-in-water emulsion have a slip melting point of between 40 and 50°C.

9. Process according to claim 7 or 8 wherein the oil-in-water emulsion comprises at least 60% by weight of the hardstock fats of the product.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 304 131 (UNILEVER) <br> * Page 3, lines 25-32; page 3, line 51 - page 4, line 9; page 4, lines 40-42; page 5, lines 15-18; page 5, line 56 - page 6, line 16; claims 1-15 * | 1-9 | A 23 D 7/00 |
| X | EP-A-0 354 600 (UNILEVER) <br> * Claims 1,5; page 3, lines 44-45,50-56; page 4, lines 34-36 * | 1,7 | |
| P,A | EP-A-0 375 027 (THE PROCTER & GAMBLE CO.) <br> * Claims 1,3,7,8; page 9, lines 24-26 * | 1 | |
| P,A | EP-A-0 383 380 (UNILEVER) <br> * Claim 1 * | 1 | |
| A | US-A-3 917 859 (KIMIO TERADA et al.) <br> * Claim 1 * | 1 | |
| A | EP-A-0 304 130 (UNILEVER) <br> * Example 1 * | 1 | |
| A | EP-A-0 291 106 (THE PROCTER & GAMBLE CO.) <br> * Claims 1,8; example IV * | 1 | TECHNICAL FIELDS SEARCHED (Int. Cl.5) <br><br> A 23 D |

The present search report has been drawn up for all claims

| Place of search | Date of completion of search | Examiner |
|---|---|---|
| The Hague | 04 July 91 | DEKEIREL M.J. |